# EUROPÄISCHE PATENTSCHRIFT

(11) **EP 1 870 734 B1**
(45) Veröffentlichungstag und Bekanntmachung des Hinweises auf die Patenterteilung: **14.01.2009**
(21) Anmeldenummer: 07110158.8
(22) Anmeldetag: 13.06.2007
(51) Int. Cl.: G01V 8/20

(54) **Optoelektronisches Sicherheitslichtgitter mit wenigstens zwei Sende-Empfangsleisten**
Opto-electronic light curtain with at least two transmitting-receiving bars
Rideau de lumière opto-électronique avec au moins deux barres de transmission/réception

(30) Priorität: 20.06.2006 EP 06012588
(43) Veröffentlichungstag der Anmeldung: 26.12.2007
(73) Patentinhaber: SICK AG, 79183 Waldkirch (DE)
(72) Erfinder: Klingelhöfer, Dr. Christian, 79110, Freiburg (DE); Wüstefeld, Martin, 79350, Sexau (DE)
(74) Vertreter: Ludewigt, Christoph

(56) Entgegenhaltungen:
- EP-A- 1 615 053
- EP-A2- 1 260 950
- WO-A-01/69582
- DE-A1-2102004 022 81
- DE-A1-9102005 050 97
- US-A- 4 650 990

## Beschreibung

Die Erfindung betrifft eine Vorrichtung nach dem Oberbegriff des Anspruchs 1.

Aus der DE 35 30 646 A1 ist eine Flächensicherung bekannt, bestehend aus zwei sich gegenüberliegenden Sende- und Empfangsleisten, die durch Zuleitungen miteinander verbunden sind. Die beiden Sende- und Empfangsleisten sind in Empfangsbereiche und Sendebereiche unterteilt. Gruppen von Sendeelementen und Empfangselementen werden nacheinander angesteuert. Jedem Empfangselement ist ein Sendeelement zugeordnet, dessen Licht bei freiem Schutzfeld empfangen wird. Die von den Empfangselementen ausgehenden Signale werden in einer Mehrfachauswertung ausgewertet. Die beschriebene Flächensicherung findet Anwendung als Durchgangs- oder Durchgriffsicherung zur Maschinenabsicherung, um Bedienpersonal vor gefahrbringenden Bewegungen der Maschine zu schützen. Die entsprechende Sicherheitsnormen, wie z. B. EN 954 und/oder IEC 61508, müssen dabei erfüllt werden.

Diese Flächensicherung weist jedoch wesentliche Nachteile auf. Zwischen den gegenüberliegenden Sende- und Empfangsleisten ist eine Zuleitung erforderlich und eine weitere Zuleitung ist notwendig zur Verbindung mit der gemeinsamen Ansteuerschaltung und Auswerteschaltung. Es müssen dabei mindestens drei Gehäuse durch Leitungen miteinander verbunden werden, was gerade bei weiten Abständen zwischen den beiden Sende- und Empfangsleisten störend ist. Diese Zuleitungen benötigen auch zusätzlich elektrisch feste oder trennbare Verbindungen an den Leisten. Dies führt zu zusätzlichen Kosten für eine solche Flächensicherung.

Weiter muss die Auswerteschaltung zwei Auswertekanälen aufweisen, um den Anforderungen der Berufsverbände für Sicherheitstechnik zu entsprechen. Die in Gruppen zusammengefassten Sendeelemente und Empfangselemente werden über die zwei Auswertekanäle der Auswerteschaltung zugeführt. Die Auswertekanäle sind dabei über die Auswerteschaltung elektrisch miteinander verbunden. Hierüber können elektrische Störungen von einem Kanal auf den benachbarten Kanal übertragen werden und eine negative Beeinflussung des Nachbarkanals hervorrufen. Um den Anforderungen der Berufsverbände zu genügen, ist es notwendig, mögliche elektrische Kopplungen zwischen den Kanälen auszuschließen oder zumindest aufzudecken und entsprechende Maßnahmen einzuleiten, wie beispielsweise ein Ausgeben einer Fehler- oder Warnmeldung und die gefahrbringende Bewegung vorsichtshalber abzuschalten. Hierdurch entstehen Einschränkungen in der Verfügbarkeit eines solchen Sicherheitslichtgitters und ein erhöhter elektrischer Schaltungsaufwand zur Testung der zweikanaligen Baugruppe.

Aus der WO 01/69582 A1 ist ein photoelektrischer Sensor für einen berührungssensitiven Monitor bekannt mit wenigstens zwei photoelektrischen Leisten, wobei jede Leiste abwechselnd Sendedioden und Empfangselemente aufweist. Die Steuerelektronik für die einzelnen Sender und Empfänger sind zwar im Wesentlichen identisch ausgebildet, jedoch ist die elektrische Verbindung zu der Steuerschaltung für die beiden Leisten unterschiedlich ausgebildet. So weist die Schnittstelle zwischen Steuerschaltung und den Leisten unterschiedliche Signalleitungen auf. Für den Aufbau eines Lichtgitter sind wie gewohnt zwei unterschiedliche, einander gegenüberliegende Leisten notwendig.

Die EP 1 260 950 A2 zeigt eine optische Absperrung zur Zugangskontrolle mit zwei nur mechanisch konstruktiv identischen Leisten mit Infrarotlichtsendern und Infrarotlichtempfängern. Die von einer ersten Leiste ausgesendeten Lichtimpulse werden dabei von einer zweiten Leiste empfangen und verzögert an die erste Leiste zurückgesendet. Wiederum bilden zwei in ihren Funktionen unterschiedliche Leisten das Lichtgitter.

Aus der US 4,650,990 A1 ist ein Lichtgittersystem bekannt mit einer Master- und einer Slaveeinheit, welche eine Vielzahl von Sende- und Empfangselementen aufweist. Die Position und Reihenfolge der Sende- und Empfangselemente ist unterschiedlich zwischen der Master- und Slaveeinheit.

Aus der EP 1 615 053 A1 ist ein Lichtgitter für den Bereich Security (Diebstahlsicherung etc.) bekannt. Da für diese Anwendung die Sicherheitsnormen nicht erfüllt werden müssen, ist deren Aufbau, insbesondere der elektronische, grundsätzlich anders und insbesondere nicht redundant.

Die DE 10 2004 022 812 A1 offenbart ein Lichtgitter mit einer Sendereinheit mit einer Anzahl von Licht emittierenden Sendern und einer Empfängereinheit mit einer Anzahl von Empfängern.

Der Erfindung liegt die Aufgabe zugrunde, ein verbessertes Sicherheitslichtgitter bereitzustellen.

Die Aufgabe wird erfindungsgemäß nach Anspruch 1 dadurch gelöst, dass ein Sicherheitslichtgitter bestehend aus wenigstens zwei Sende-Empfangsleisten, in welchen jeweils Sende- und Empfangselemente angeordnet sind, vorhanden ist. Die Sende-Empfangsleisten sind einander gegenüberliegend angeordnet, wobei zwischen diesen Sende-Empfangsleisten ein Schutzfeld gebildet ist. Mittel zur Synchronisation der Sende-Empfangsleisten sind ausgebildet und eine Steuer- und Auswerteeinheit ist vorhanden. Die Sende-Empfangsleisten sind identisch aufgebaut und in jeder Sende-Empfangsleiste ist eine Steuer- und Empfangseinheit integriert. Die Steuer- und Auswerteeinheiten sind einkanalig ausgebildet und weisen jeweils wenigstens einen sicherheitsgerichteten Ausgang auf, die beide zusammen einen für die Sicherheit erforderlichen redundanten Schaltkanal bilden. Elektrische Anschlüsse für beide Sende-Empfangsleisten sind identisch ausgebildet.

Der wesentliche Vorteil ist, dass die erfindungsgemäßen Sende-Empfangsleisten jeweils identisch aufgebaut sind. Für das Sicherheitslichtgitter können somit zwei identische Sende-Empfangsleisten eingesetzt werden. Damit muss nur eine einzige Baugruppe, nämlich die Sende-Empfangsleiste hergestellt werden, um ein Sicherheitslichtgitter, bestehend aus zwei solchen gegenüberliegenden Sende-Empfangsleisten, zur Bildung eines Schutzfeldes bereitzustellen. Zur Wartung des Sicherheitslichtgitters braucht auch nur eine einzige Sende-Empfangsleiste bevorratet zu werden, um bei Ausfall oder Fehlfunktion einer Leiste eine funktionsfähige Ersatzleiste zur Hand zu haben.

Durch die Ausbildung der Sende-Empfangsleiste mit jeweils einer Steuer- und Auswerteeinheit braucht diese nur einkanalig ausgebildet sein. Zur Absicherung einer gefahrbringenden Bewegung wird der sicherheitsgerichtete Ausgang jeder Sende-Empfangsleiste des Sicherheitslichtgitters mit einer sicheren Maschinensteuerung verbunden, so dass bei Verletzung des Schutzfeldes und Auslösen eines Schaltsignals an mindestens einem der beiden sicheren Ausgänge eine gefahrbringende Bewegung abgeschaltet wird. Die Sende-Empfangsleisten bilden somit ein Sicherheitslichtgitter mit zwei einfachen einkanaligen einzelnen Sende-Empfangsleisten, die zusammen dennoch die für die Sicherheit erforderliche Redundanz in den Schaltkanälen haben. Hierdurch ist ein kostengünstiges Sicherheitslichtgitter geschaffen. Die jeweiligen Steuer- und Auswerteeinheiten der beiden Sende-Empfangsleisten sind hierbei elektrisch und räumlich voneinander getrennt. Eine gegenseitige Beeinflussung ist dadurch nicht möglich. Auch brauchen die beiden Steuer- und Auswerteeinheiten nicht gegenseitig getestet werden, um beispielsweise eine Querschlusserkennung zwischen den beiden sicherheitsgerichteten Ausgängen aufzudecken, da ein solcher Querschluss durch die elektrische und räumliche Trennung erst gar nicht auftreten kann. Die Steuer- und Auswerteeinheit kann somit bei gleicher Sicherheitsstufe sehr kostengünstig und einfach hergestellt werden.

Auch elektrische Anschlüsse für beide Sende-Empfangsleisten sind identisch ausgebildet. Hiermit vereinfacht sich eine Verbindungstechnik, da nur ein Typ von Steckverbinder vorgesehen werden muss. Die Sende-Empfangsleisten können dadurch auch einfach angeschlossen werden, da nicht wie bei bisherigen Sicherheitslichtgittern, bestehend aus Sender und getrenntem Empfänger, unterschiedliche Anschlüsse für Sender und den Empfänger vorgesehen werden müssen.

Durch eine optische Synchronisation oder eine Synchronisation über Funk sind die beiden Sende-Empfangsleisten vorteilhaft einfach positionierbar. Es muss lediglich von jeder Leiste eine Verbindung zu einer Maschinensteuerung gelegt werden um den sicherheitsgerichteten Ausgang zu verbinden. Gerade bei großen Entfernungen zwischen den Sende- und Empfangsleisten sind somit keine zusätzlichen langen Verbindungen notwendig. Eine optische Synchronisation oder eine Synchronisation über Funk ist auch unempfindlich gegenüber elektrischen und magnetischen Störeinflüssen. Gerade bei einem Einsatz in Industrieanlagen ist dies von Vorteil.

Eine Synchronisation über Funk hat den zusätzlichen Vorteil, dass keine optische Sichtverbindung zur Synchronisation zwischen den Leisten vorhanden sein muss.

In Weiterbildung der Erfindung ist ein Zufallszeitgeber vorhanden, um die Sendeelemente nach einem Einschalten einer Spannungsversorgung zu aktivieren. Durch den Zufallszeitgeber ist es möglich, dass eine der zwei gegenüberliegenden Sende-Empfangsleisten früher als die andere Sendelichtstrahlen aussendet. Die gegenüberliegende Sende-Empfangsleiste empfängt diese Lichtstrahlen und aktiviert danach jeweils die eigenen Sendeelemente nachfolgend. Die Reihenfolge und die entsprechenden Zeiten zur Aktivierung der Sende- und Empfangselemente ist nach Ablauf der Zufallszeit in beiden Leisten gleich, wodurch ein synchrones Senden und Empfangen zwischen den Sende-Empfangsleisten ermöglicht wird. Somit ist keine Abstimmung der beiden Leisten notwendig. Eine automatische Inbetriebnahme des Sicherheitslichtgitters ist damit möglich.

Das erfindungsgemäße Sicherheitslichtgitter kann aber auch mit Mitteln zur leitungsgebundenen Synchronisation ausgebildet sein. Dies ist von Vorteil bei kurzen Abständen zwischen den Sende-Empfangsleisten. Die leitungsgebundene Synchronisation zwischen den Sende-Empfangsleisten kann hierbei über die sowieso bestehende Leitungsführung zur Maschinensteuerung hergestellt werden.

In Weiterbildung der Erfindung weisen die Sende- und Empfangselemente jeweils eine Optik auf. Durch die Optik ist es möglich, die Lichtstrahlen zu bündeln und eine Reichweitenerhöhung zu erzielen. Dadurch ist es möglich, die Abstände zwischen den Sende-Empfangsleisten zu erhöhen und größere Bereiche durch die größeren Schutzfelder zu überwachen. Auch lässt sich mit Hilfe der Optiken ein ausgehender Lichtkegel oder ein Empfangslichtkegel mit einem kleinen festgelegten resultierenden Abstrahlwinkel bzw. Empfangswinkel realisieren. Dadurch kann den Bestimmungen der Berufsverbände für Sicherheitstechnik entsprochen werden.

Zur Anzeige eines Schaltzustandes des sicherheitsgerichteten Ausgangs sind Anzeigemittel vorhanden. Durch die Anzeigemittel ist der Schaltzustand direkt an der Sende-Empfangsleiste ablesbar. Dadurch ist eine Diagnose, beispielsweise bei einer Inbetriebnahme des Sicherheitslichtgitters oder bei einer Fehlfunktion, sehr einfach möglich. Die Anzeigemittel zeigen einem Bediener jederzeit den Schaltzustand der sicheren Ausgänge an, zur Beurteilung einer einwandfreien Funktion des Sicherheitslichtgitters. Zusätzlich können die Anzeigemittel auch zur Ausgabe weiterer Informationen ausgebildet sein. Einzelne Fehlermeldungen können auch über eine Sieben-Segmentanzeige oder ein LCD-Display ausgegeben werden. Auch können zusätzliche verschiedenfarbige Anzeigemittel vorgesehen sein zur Anzeige einer falschen Justage oder von verschiedenen Betriebszuständen.

In einer besonderen Ausführungsform sind die Sende- und Empfangselemente innerhalb einer Sende-Empfangsleiste abwechselnd einzeln nacheinander angeordnet. Die Zuordnung von einzelnen Sendeelementen der einen Leiste zu einzelnen Empfangselementen der anderen, identisch aufgebauten Leiste ist damit vereinfacht, denn dann liegen einander zugeordnete möglichst nahe beieinander.

Durch die Wahl der Abstände der einzelnen Sende- und Empfangselemente werden unterschiedliche Auflösungen zur Erfassung von Objekten zur Anpassung an die benötigte Applikation realisiert.

Zur Vereinfachung der Ansteuerung und Auswertung der Sende- und Empfangselemente können diese in einer festen Reihenfolge nacheinander angesteuert und ausgewertet werden. Dadurch können die Sende- und Empfangselemente der beiden Sende-Empfangsleisten identisch angesteuert werden. Die feste Reihenfolge kann sich auch über mehrere Ansteuer- bzw. Abtastzyklen der Sende- und Empfangselemente erstrecken. Beispielsweise weisen n Ansteuer- bzw. Abtastzyklen ein festes Schema oder eine feste Periode zur Ansteuerung und Auswertung der Sende- und Empfangselemente auf, die sich dann immer nach n Ansteuer- bzw. Abtastzyklen wiederholt.

Um eine Konfiguration des Sicherheitslichtgitters beispielsweise nur in einer Sende-Empfangsleiste durchführen zu müssen, ist es vorteilhaft vorgesehen, Daten, wie beispielsweise Konfigurationsdaten, zwischen den beiden Sende-Empfangsleisten auszutauschen. Dazu sind in Weiterbildung der Erfindung Mittel vorhanden zur optischen Datenübertragung zwischen Sende- und Empfangselementen. Eine eingegebene Konfiguration, beispielsweise zur gezielten Ausblendung von Objekten im Schutzfeld, können nach der Eingabe in eine Sende-Empfangsleiste automatisch zur gegenüberliegenden Sende-Empfangsleiste übertragen werden. Für bestimmte Funktionseinstellungen brauchen somit nicht beide Sende-Empfangsleisten konfiguriert werden. Dies vereinfacht und erleichtert die Inbetriebnahme wesentlich.

In einer weiteren Ausführung sind Mittel zum Einlernen von Schaltschwellen der Empfangselemente und/oder von Sendeströmen der Sendeelemente vorhanden. Durch das Einlernen der Schaltschwellen und/oder der Sendeströme werden diese eingelernten Werte bei einem bestimmungsgemäßen Betrieb der beiden Sende-Empfangsleisten entsprechend einem vorgegebenen Abstand der Sende-Empfangsleisten eingestellt. Die elektrischen Bauteile und insbesondere die optischen Bauteile brauchen somit in der Herstellung nicht auf unterschiedliche Sendeströme und dadurch verursachte Sendeleistungen, sowie dadurch verursachte Änderungen des Sendewinkels ausgelegt werden. Auch die Empfangselemente brauchen nicht unnötig hohen Bandbreitenanforderungen entsprechen. Dadurch können die elektronischen und optischen Bauteile kostengünstiger und einfacher ausgelegt und/oder hergestellt werden. Durch ein Abstimmen der optischen Leistungswerte zwischen den Leisten kann auch eine Verfügbarkeit in dem bestimmungsgemäßen Betrieb erhöht werden. Dadurch wird das Sicherheitslichtgitter unempfindlicher gegen Fremdlicht oder optische Störstrahlung.

Vorteilhaft sind die Sende-Empfangsleisten um 180° verdreht zueinander angeordnet. Dadurch liegen die Sendeelemente der einen Leiste den Empfangselementen der gegenüberliegenden Leiste bei fluchtenden Gehäusen direkt gegenüber. Dadurch ist eine parallele Ausrichtung optischer Strecken zwischen den Sende- und Empfangselemente der beiden Leisten vereinfacht möglich. Hierdurch ergibt sich ein homogenes Schutzfeld mit einer gleichmäßigen Auflösung zwischen den Leisten.

In Weiterbildung der Erfindung sind an beiden Enden der Sende-Empfangsleisten identische elektrische Anschlüsse vorgesehen. Dadurch kann ein Anschluss des Sicherheitslichtgitters wahlweise auf beiden Seiten erfolgen. Zum einfacheren und flexibleren Anschließen des Sicherheitslichtgitters sind auf beiden Seiten der Leisten elektrische Anschlüsse in Form von Steckeranschlüssen, Klemmanschlüssen oder anderen Kontaktelementen vorgesehen. Insbesondere wenn die Leisten um 180° verdreht zueinander angeordnet sind, kann die elektrische Kontaktierung der Leisten von einer gemeinsamen Seite erfolgen.

Im Folgenden wird die Erfindung an Hand von Ausführungsbeispielen unter Bezugnahme auf die Zeichnung im Einzelnen erläutert. In der Zeichnung zeigen:
- Figur 1: eine schematische Darstellung eines erfindungsgemäßen Sicherheitslichtgitters;
- Figur 2 bis 4: weitere schematische Darstellungen mit Sende- und Empfangselementen und gebildeten optischen Lichtwegen.

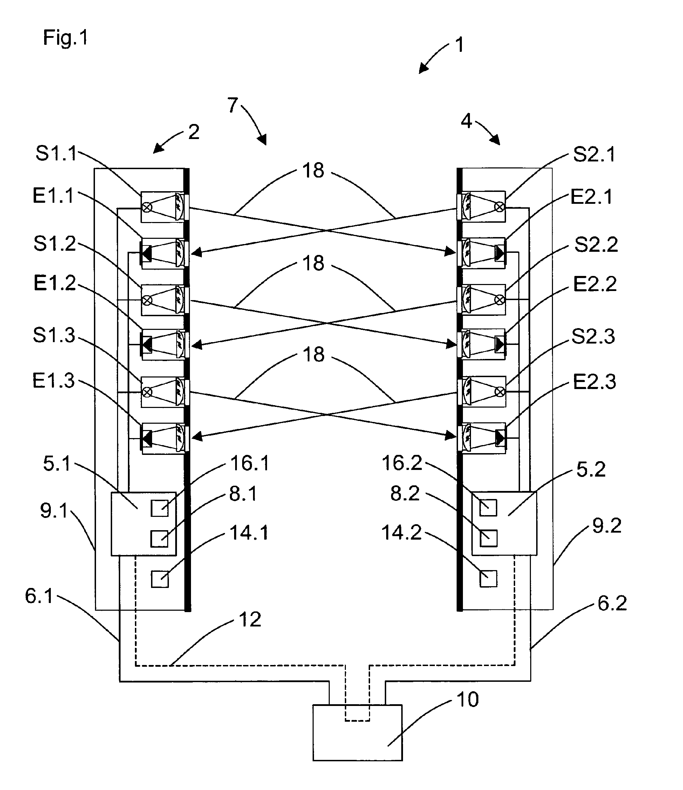

Figur 1 zeigt ein Sicherheitslichtgitter 1, bestehend aus zwei Sende-Empfangsleisten 2 und 4. Die Sende-Empfangsleisten 2 und 4 sind identisch ausgebildet und zueinander gegenüberliegend angeordnet. Die Sendeelemente S1.1 bis S1.3 der ersten Sende-Empfangsleiste 2 senden dabei Licht aus, welches von den Empfangselementen E2.1 bis E2.3 der zweiten Sende-Empfangsleiste 4 empfangen wird, dargestellt durch die optischen Lichtwege 18. Umgekehrt wird ausgehendes Licht von den Sendeelementen S2.1 bis S2.3 der zweiten Sende-Empfangsleiste 4 durch Empfangselemente E1.1 bis E1.3 der ersten Sende-Empfangsleiste 2 empfangen. Dadurch wird zwischen den Sende-Empfangsleisten 2 und 4 ein Schutzfeld 7 gebildet. Ein solches Sicherheitslichtgitter 1 findet beispielsweise Anwendung an Maschinen zur Absicherung von gefahrbringenden Bewegungen für Personen. Greift eine Person unerlaubt in das Schutzfeld 7 ein, wird wenigstens ein Lichtweg 18 unterbrochen. Das führt über einen sicheren Ausgang 6.1 und/oder 6.2 zur Ausgabe eines Signals an eine Maschinensteuerung 10, um die gefahrbringende Bewegung zum Schutz der Person zu stoppen.

Die Sende-Empfangsleisten 2 bzw. 4 bestehen aus den Sendeelementen S1.1, S1.2 und S1.3 bzw. S2.1, S2.2 und S2.3. Abwechselnd hierzu sind die Empfangselemente E1.1, E1.2 und E1.3 bzw. E2.1, E2.2 und E2.3 angeordnet. Die Sende- und Empfangselemente sind hierbei nacheinander in einer Reihe oder versetzt zueinander in einem Gehäuse 9.1 bzw. 9.2 angebracht. Ein Versatz vereinfacht eine interne Leitungsführung. Die Sendeelemente S1.1 bis S2.3 bestehen dabei aus einem Sendebauteil, beispielsweise einer Fotodiode und einer Sendeoptik, bestehend aus einer oder mehrerer Linsen. Die Empfangselemente E1.1 bis E2.3 sind analog dazu aus einem photoempfindlichen Bauteil und einer Optik aufgebaut. Die optischen Achsen der Sende- und Empfangselemente einer Sende-Empfangsleiste sind dabei parallel zueinander ausgerichtet.

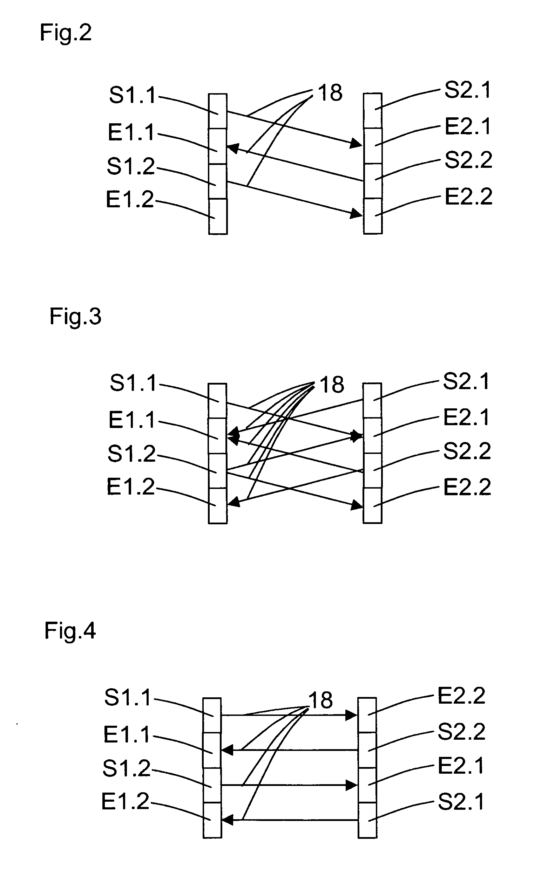

Zur Ansteuerung und Auswertung sind die Sende- und Empfangselemente mit einer Steuer- und Auswerteeinheit 5.1 bzw. 5.2 verbunden. Die Sendeelemente werden durch die Steuer- und Auswerteeinheit nacheinander angesteuert, wobei diese gepulst angesteuert werden können zur Unterdrückung von Fremdlichtsignalen. Die Empfangselemente werden nacheinander ausgewertet zum Empfang der Lichtpulse von den gegenüberliegenden Sendeelementen. Damit die beiden Sende-Empfangsleisten zusammenarbeiten können, um das Schutzfeld 7 aufzuspannen, sind Paare von Sende- und Empfangselementen zur Bildung der Lichtwege 18 aufeinander abzustimmen, so dass beispielsweise das Empfangselement E2.1 nur das Licht von dem Sendeelement S1.1 empfängt. Dazu weist die Steuer- und Auswerteeinheit 5.1 bzw. 5.2 Mittel zur zeitlichen Synchronisation 8.1 bzw. 8.2 auf. Die Steuer- und Auswerteeinheit kann damit die Auswertung der Empfangselemente auf die Sendepulse der gegenüberliegenden Sendeelemente synchronisieren, wodurch die Lichtwege 18 definiert sind. Nach der Ausführungsform der Fig. 1 und 3 überkreuzen sich die Lichtwege 18.

Da beide Sende-Empfangsleisten identisch aufgebaut sind und damit identisch arbeiten, ist der Beginn der Synchronisation problematisch. Zur Lösung gibt es verschiedene Möglichkeiten.

In einer ersten Ausführungsform wird mittels eines Zufallsgenerators ein Unterschied geschaffen. Zunächst werden beispielsweise die ersten Empfangselemente E1.1 und E2.1 nach dem Einschalten der Sende-Empfangsleisten 2 und 4 dauernd auf Empfangsbetrieb geschaltet. Mittels eines Zufallszeitgebers 16.1 bzw. 16.2 beginnt beispielsweise das Sendeelement S1.1 der ersten Leiste 2 zuerst Sendesignale auszusenden. Das Empfangselement E2.1 der anderen Sende-Empfangsleiste 4 empfängt diese Sendesignale des Sendeelementes S1.1 und steuert dann mit Hilfe der Steuer- Auswerteeinheit 5.2 das Sendeelement S2.1 an und danach nacheinander mit festgelegten Zeitabständen und Reihenfolge die Sendeelemente S2.2 und S2.3. Das Sendesignal des Sendeelements S2.1 wird von dem Empfangselement E1.1 empfangen, woraufhin in der ersten Leiste 2 derselbe Ablauf erfolgt und somit auch dort nacheinander die Sendeelemente S1.2 und S1.3 angesteuert werden. Abgestimmt auf die zeitliche Abfolge der Sendeelemente S1.2 und S1.3 werden die Empfangselemente E2.2 und E2.3 angesteuert. Eine Synchronisation der beiden Sende-Empfangsleisten 2 und 4 ist damit realisiert.

In einer weiteren Ausführungsform kann die Synchronisation über eine Verbindungsleitung 12, die zum Schaltschrank besteht, erfolgen. Damit ist es möglich, die beiden Geräte elektrisch zu synchronisieren. Die Leitung 12 zur Synchronisation kann beispielsweise im selben Kabel wie die Leitung für den sicherheitsgerichteten Ausgang 6.1 bzw. 6.2 mitgeführt werden.

Wird mindestens ein Lichtweg 18 zwischen einem Sendeelement und einem zugehörigen Empfangselement unterbrochen, so wird über die Steuer- und Auswerteeinheit 5.1 bzw. 5.2 ein Schaltsignal an den sicherheitsgerichteten Ausgang 6.1 bzw. 6.2 ausgegeben. Der sicherheitsgerichtete Ausgang ist dazu mit der Maschinensteuerung 10 verbunden. Zur sicheren Abschaltung von gefahrbringenden Bewegungen sind nach Vorschriften zum Arbeitsschutz zwei Schaltsignale vorzusehen. Mindestens eines der Schaltsignale führt zu einem sicheren Abschalten eines betreffenden Aktors. Ist beispielsweise eines der Schaltsignale durch einen Kurzschluss nicht mehr änderbar, kann über das zweite Schaltsignal die gefahrbringende Bewegung abgeschaltet werden. Bei dem erfindungsgemäßen Sicherheitslichtgitter 1 wird jeweils einer der zwei sicherheitsgerichteten Ausgänge 6.1 und 6.2 durch eine der Sende-Empfangsleisten 2 und 4 zur Verfügung gestellt. Eine Auflösung des Schutzfeldes 7 wird dabei so gewählt, dass durch ein kleinstes erlaubtes Objekt mindestens zwei gegenläufige Lichtstrahlen 18 abgedeckt werden. Durch ein Objekt wird somit mindestens der Empfang von Licht in mindestens einem Empfangselement je Sende-Empfangsleiste 2 und 4 unterbrochen. Damit stellen beide Sende-Empfangsleisten 2 und 4 jeweils ein sicheres Schaltsignal am sicherheitsgerichteten Ausgang 6.1 und 6.2 zur Verfügung. Damit ist es mit dem erfindungsgemäßen Sicherheitslichtgitter 1 möglich, zwei elektrisch vollkommen unabhängige sicherheitsgerichtete Ausgänge 6.1 und 6.2 zur Verfügung zu stellen. Eine gegenseitige elektrische Beeinflussung wie z. B. ein Querschluss zwischen den beiden sicherheitsgerichteten Ausgängen 6.1 und 6.2 ist damit ausgeschlossen. Bei dem erfindungsgemäßen Sicherheitslichtgitter 1 entfallen damit auch elektrische Zusatzmaßnahmen, um Fehler wie Querschlüsse oder Kurzschlüsse auf den sicherheitsgerichteten Ausgängen 6.1 bis 6.2 aufzudecken.

Zur Anzeige des Schaltzustandes des sicherheitsgerichteten Ausgangs 6.1 bzw. 6.2 sind Anzeigemittel 14.1 bzw. 14.2 an der Sende-Empfangsleiste angebracht. Die Anzeigemittel zeigen durch die Farbe Grün ein freies Schutzfeld 7 an und es wird kein Schaltsignal zur Abschaltung einer gefahrbringenden Bewegung ausgegeben. Die Farbe Rot wird angezeigt, wenn ein Objekt im Schutzfeld 7 erkannt wurde und der sicherheitsgerichtete Ausgang geschaltet wird zur Abschaltung einer gefahrbringenden Bewegung. Die Anzeigemittel können auch zur Anzeige von weiteren Informationen als Siebensegment Anzeige oder LCD-Anzeige ausgebildet sein. Damit können zusätzliche Diagnoseinformationen angezeigt werden. Zusätzlich kann z. B. durch eine Anzeige in gelber Farbe auch eine Teilabdeckung eines Lichtstrahles angezeigt werden.

Die Anschlussleitungen für die beiden Sende-Empfangsleisten 2 und 4 sind jeweils identisch. Für den Anschluss an die Maschinensteuerung 10 können hierdurch gleiche Stecker und Anschlussleitungen verwendet werden. Bei einem Austausch von defekten Sende-Empfangleisten 2 und 4 braucht beispielsweise nur ein Typ einer Sende-Empfangsleiste mit zugehörigem Stecker und Anschlusskabel vorgehalten werden. Eine Lagerhaltung von Ersatzteilen wird hierdurch wesentlich vereinfacht. Selbst bei der Herstellung eines solchen Sicherheitslichtgitters 1 brauchen lediglich zwei identische Sende-Empfangsleisten hergestellt werden.

Die Sende- und Empfangselemente können auch gruppenweise abwechselnd angeordnet sein. Beispielsweise können nacheinander zwei Sendeelemente und danach zwei Empfangselemente nacheinander angeordnet werden. Dadurch können mit identischen Sende- und Empfangselementen verschiedene Auflösungen realisiert werden.

In Figur 2 ist beispielhaft eine weitere Auswertung der optischen Lichtwege 18 zwischen den Sende- und Empfangselementen S1.1 bis S2.2 und E1.1 bis E2.2 der Sende-Empfangsleisten schematisch dargestellt. Der Einfachheit halber sind nur die Sende-Empfangselemente S1.1 bis S2.2 und E1.1 bis E2.2 der Sende-Empfangsleisten dargestellt. Gleiche Teile sind hierbei mit gleichen Bezugszeichen innerhalb der Figuren 1 bis 3 dargestellt. In diesem Ausführungsbeispiel werden die baugleichen Sende-Empfangsleisten durch die jeweilige Steuer- und Auswerteeinheiten unterschiedlich angesteuert. Vor Inbetriebnahme des Sicherheitslichtgitters kann eine Konfiguration eingestellt werden und in den jeweiligen Sende-Empfangsleisten gespeichert werden. Um nur eine Sende-Empfangsleiste konfigurieren zu müssen, sind Mittel zur optischen Datenübertragung vorgesehen. Beispielsweise kann über eine voreingestellte optische Übertragungsstrecke gebildet aus S1.1 und E2.1 und/oder S2.1 und E1.1 eine Konfiguration zwischen den beiden Sende-Empfangsleisten übertragen werden. Nach dem Einschalten beginnt zunächst das Sendeelement S1.1 Lichtpulse auszusenden. Nach dem Empfang von den ausgesendeten Lichtpulsen durch Empfangselement E2.1 werden Lichtpulse über Sendeelement S2.2 ausgesendet, welche über Empfangselement E1.1 empfangen werden. Nach einem Empfangen von Sendepulsen über Empfangselement E2.2 sendet erneut Sendeelement S1.1, angesteuert von der Steuer- und Auswerteeinheit. Ein erneuter Zyklus wird gestartet. Auch andere Konfigurationen, wie eine Ausblendung von Objekten im Sicherheitslichtgitter, Stummschalten des Sicherheitslichtgitters für eine bestimmte Zeitdauer, eine Wiederanlaufsperre oder eine Schützkontrolle kann als Konfiguration zwischen den Sende-Empfangsleisten übertragen werden. Eine solche Datenübertragung kann auch zur Synchronisation benutzt werden.

In Figur 3 ist eine weitere Möglichkeit zur Steuerung und Auswertung der Sende- und Empfangselemente S1.1 bis S2.2 und E1.1 bis E2.2 dargestellt. Dabei empfangen einzelne Empfangselemente E1.1 und E2.1 nacheinander von unterschiedlichen Sendeelementen S1.1 bis S2.2 Lichtimpulse. Die Sendeelemente S1.2 bzw. S2.2 senden hierzu Lichtpulse für unterschiedliche Empfangselemente E1.1 und E1.2 bzw. E2.1 und E2.2 nacheinander aus.

Hierdurch wird mit den Sende-Empfangselementen S1.1 bis S2.2 und E1.1 bis E2.2 eine höhere Auflösung erreicht gegenüber der Abtastung in Figur 1. Gegenüber der Abtastung aus Figur 2 wird zusätzlich das Sendeelement S2.1 und das Empfangselement E1.2 angesteuert. Empfangselement E2.1 empfängt dabei nacheinander Lichtpulse von Sendeelement S1.1 und von Sendeelement S1.2. Empfangselement E1.1 empfängt ebenso nacheinander Lichtimpulse von Sendeelement S2.1 und S2.2. Hierdurch kann beispielsweise auch auf eine Position eines Objektes horizontal im Schutzfeld geschlossen werden.

In Figur 4 ist eine weitere Ausbildung des erfindungsgemäßen Sicherheitslichtgitters mit Anordnungen von Sende- und Empfangselementen S1.1 bis S2.2 und E1.1 bis E2.2 dargestellt. Die zweite Leiste mit den Sende- und Empfangselementen S2.1, S2.2, E2.1 und E2.2 ist dabei um 180° verdreht zu der ersten Leiste angeordnet im Vergleich zu der Anordnung aus Figur 3. Dadurch sind die optischen Lichtwege 18 parallel zueinander. Dies führt vorteilhaft zu einer gleichbleibenden Auflösung zwischen den beiden Leisten zur Objektdetektion.

### Bezugszeichen:

1 Sicherheitslichtgitter
2 erste Sende-Empfangsleiste
4 zweite Sende-Empfangsleiste
5.1, 5.2 Steuer und Auswerteeinheit
6.1, 6.2 sicherheitsgerichteter Schaltausgang
7 Schutzfeld
8.1, 8.2 Mittel zur Synchronisation
9.1, 9.2 Gehäuse
10 Maschinensteuerung
12 leitungsgebundene Synchronisation
14.1, 14.2 Anzeigemittel
16.1, 16.2 Zufallszeitgeber
18 optische Lichtwege
S1.1, S1.2, S1.3, S2.1, S2.2, S2.3 Sendeelemente
E1.1, E1.2, E1.3, E2.1, E2.2, E2.3 Empfangselemente

## Patentansprüche

1. Sicherheitslichtgitter bestehend aus
- wenigstens zwei Sende-Empfangsleisten (2 und 4), in welchen
- jeweils Sende- und Empfangselemente (S1.1 bis S2.3 und E1.1 bis E2.3) angeordnet sind,
- die Sende-Empfangsleisten (2 und 4) einander gegenüberliegend angeordnet sind, wobei zwischen diesen ein Schutzfeld (7) gebildet ist und
- mit Mitteln zur Synchronisation (8.1, 8.2) der Sende-Empfangsleisten (2, 4),
- mit einer Steuer- und Auswerteeinheit, wobei
- in jeder Sende-Empfangsleiste eine Steuer- und Auswerteeinheit (5.1, 5.2) integriert ist,
- die Steuer- und Auswerteeinheiten (5.1, 5.2) einkanalig ausgebildet sind
- und jeweils wenigstens einen sicherheitsgerichteten Ausgang (6.1, 6.2) aufweisen,
- die jeweils beiden sicheren Ausgänge zusammen einen für die Sicherheit erforderlichen redundanten Schaltkanal des Sicherheitslichtgitters bilden, **dadurch gekennzeichnet, dass**
- die Sende-Empfangsleisten (2 und 4) identisch aufgebaut sind,
- und identische elektrische Anschlüsse für jede Sende-Empfangsleiste ausgebildet sind.

2. Sicherheitslichtgitter nach Anspruch 1, **dadurch gekennzeichnet, dass** die Mittel zur Synchronisation (8.1, 8.2) zur Synchronisation mittels Funkübertragung oder zur optischen Synchronisation ausgebildet sind.

3. Sicherheitslichtgitter nach Anspruch 2, **dadurch gekennzeichnet, dass** ein Zufallszeitgeber (16.1, 16.2) vorhanden ist, um die Sendeelemente (S1.1 bis S2.3) nach einem Einschalten einer Spannungsversorgung zu aktivieren.

4. Sicherheitslichtgitter nach Anspruch 1, **dadurch gekennzeichnet, dass** die Mittel zur Synchronisation zur leitungsgebundenen Synchronisation (12) ausgebildet sind.

5. Sicherheitslichtgitter nach einem der vorhergehenden Ansprüche, **dadurch gekennzeichnet, dass** die Sende- und Empfangselemente (S1.1 bis S2.3 und E1.1 bis E2.3) jeweils eine Optik aufweisen.

6. Sicherheitslichtgitter nach einem der vorhergehenden Ansprüche, **dadurch gekennzeichnet, dass** zur Anzeige eines Schaltzustandes des sicherheitsgerichteten Ausgangs (6.1, 6.2) Anzeigemittel (14.1, 14.2) vorhanden sind.

7. Sicherheitslichtgitter nach einem der vorhergehenden Ansprüche, **dadurch gekennzeichnet, dass** die Sende- und Empfangselemente (S1.1 bis S2.3 und E1.1 bis E2.3) abwechselnd einzeln nacheinander angeordnet sind.

8. Sicherheitslichtgitter nach einem der vorhergehenden Ansprüche, **dadurch gekennzeichnet, dass** die Sendeelemente (S1.1 bis S2.3) und die Empfangselemente (E1.1 bis E2.3) in einer festen Reihenfolge nacheinander angesteuert und ausgewertet werden.

9. Sicherheitslichtgitter nach einem der vorhergehenden Ansprüche, **dadurch gekennzeichnet, dass** Mittel vorhanden sind zur optischen Datenübertragung zwischen Sende- und Empfangselementen (S1.1 bis S2.3 und E1.1 bis E2.3).

10. Sicherheitslichtgitter nach einem der vorhergehenden Ansprüche, **dadurch gekennzeichnet, dass** Mittel zum Einlernen von Schaltschwellen der Empfangselemente und/oder von Sendeströmen der Sendeelemente vorhanden sind.

11. Sicherheitslichtgitter nach einem der vorhergehenden Ansprüche, **dadurch gekennzeichnet, dass** die Sende-Empfangsleisten um 180° verdreht zueinander angeordnet sind.

12. Sicherheitslichtgitter nach einem der vorhergehenden Ansprüche, **dadurch gekennzeichnet, dass** an beiden Enden der Sende-Empfangsleisten identische elektrische Anschlüsse vorgesehen sind.

## Claims

1. A safety light grid including
- at least two transmitting-receiving strips (2 and 4), in which
- respective transmitting elements and receiving elements (S1.1 to S2.3 and E1.1 to E2.3) are arranged,
- the transmitting-receiving strips (2 and 4) are arranged lying opposite one another, with a protected field (7) being formed between the two transmitting-receiving strips and
- with means for the synchronization (8.1, 8.2) of the transmitting-receiving strips (2, 4), and
- with a control unit and an evaluation unit, wherein
- a control- and evaluation unit (5.1, 5.2) is integrated into each transmitting-receiving strip,
- the control- and evaluation unit (5.1, 5.2) are of one channel design
- and each respectively has at least one safety directed output (6.1, 6.2),
- the two respective safety outputs together form a redundant switching channel of the safety light grid required for the safety, **characterized in that** the transmitting-receiving strips (2 and 4) are built up identically
- and identical electric contacts are formed for each transmitting-receiving strip.

2. A safety light grid in accordance with claim 1, **characterized in that** the means for synchronization (8.1, 8.2) are adapted for the synchronization by means of radio transmission or for optical synchronization.

3. A safety light grid in accordance with claim 2, **characterized in that** a random time emitter (16.1, 16.2) is provided to activate the transmitting element (S1.1 to S2.3) following the switching on of a voltage supply.

4. A safety light grid in accordance with claim 1, **characterized in that** the means for synchronization are adapted for line bound synchronization (12).

5. A safety light grid in accordance with any one of the preceding claims, **characterized in that** the transmitting elements and the receiving elements (S1.1 to S2.3 and E1.1 to E2.3) respectively include an optical device.

6. A safety light grid in accordance with any one of the preceding claims, **characterized in that** for the display of a switching state of the safety directed output (6.1, 6.2) display means (14.1, 14.2) are present.

7. A safety light grid in accordance with any one of the preceding claims, **characterized in that** the transmitting elements and the receiving elements (S1.1 to S2.3 and E1.1 to E2.3) are alternatingly and individually arranged following one another.

8. A safety light grid in accordance with any one of the preceding claims, **characterized in that** the transmitting elements (S1.1 to S2.3) and the receiving elements (E1.1 to E2.3) are controlled and evaluated in a fixed sequence one after the other.

9. A safety light grid in accordance with any one of the preceding claims, **characterized in that** means are provided for the optical data transfer between the transmitting elements and the receiving elements (S1.1 to S2.3 and E1.1 to E2.3).

10. A safety light grid in accordance with any one of the preceding claims, **characterized in that** means for the learning of switching thresholds of the receiving elements and/or the transmitting currents of the transmitting elements are provided.

11. A safety light grid in accordance with any one of the preceding claims, **characterized in that** the transmitting-receiving strips are arranged rotated about an angle of 180° relative to one another.

12. A safety light grid in accordance with any one of the preceding claims, **characterized in that** identical electric connections are provided at both ends of the transmitting-receiving strips.

## Revendications

1. Barrière lumineuse de sécurité, se composant se :
- au moins deux barrettes d'émission et de réception (2 et 4), dans lesquelles
- des éléments émetteurs et récepteurs (S1.1 à S2.3 et E1.1 à E2.3) sont situés,
- les barrettes d'émission et de réception (2 et 4) sont disposées face à face, si bien qu'une zone de protection (7) est formée entre elles, et
- avec des moyens de synchronisation (8.1, 8.2) des barrettes d'émission et de réception (2, 4),
- avec une unité de commande et d'analyse,
- une unité de commande et d'analyse (5.1, 5.2) étant intégrée dans chaque barrette d'émission et de réception,
- les unités de commande et d'analyse (5.1, 5.2) étant de construction monocanal et
- possédant chacune au moins une sortie à fonction de sécurité (6.1, 6.2),
- les deux sorties sûres formant à chaque fois ensemble un canal de commande redondant nécessaire pour la sécurité de la barrière lumineuse de sécurité,
**caractérisée en ce que** les barrettes d'émission et de réception (2 et 4) sont de construction identique
- et des raccordements électriques identiques sont prévus pour chaque barrette d'émission et de réception.

2. Barrière lumineuse de sécurité selon la revendication 1, **caractérisée en ce que** les moyens de synchronisation (8.1, 8.2) sont conformés de manière à réaliser la synchronisation par transmission radio ou optiquement.

3. Barrière lumineuse de sécurité selon la revendication 2, **caractérisée en ce qu'**il existe une horloge aléatoire (16.1, 16.2) destinée à activer les éléments émetteurs (S1.1 à S2.3) après l'application d'une tension d'alimentation.

4. Barrière lumineuse de sécurité selon la revendication 1, **caractérisée en ce que** les moyens de synchronisation sont conformés pour réaliser une synchronisation filaire (12).

5. Barrière lumineuse de sécurité selon l'une des revendications précédentes, **caractérisée en ce que** les éléments émetteurs et récepteurs (S1.1 à S2.3 et E1.1 à E2.3) possèdent chacun une optique.

6. Barrière lumineuse de sécurité selon l'une des revendications précédentes, **caractérisée en ce qu'**il existe des moyens d'affichage (14.1, 14.2) destinés à afficher un état de commutation de la sortie à fonction de sécurité (6.1, 6.2).

7. Barrière lumineuse de sécurité selon l'une des revendications précédentes, **caractérisée en ce que** les éléments émetteurs et récepteurs (S1.1 à S2.3 et E1.1 à E2.3) sont disposés les uns derrière les autres, alternativement.

8. Barrière lumineuse de sécurité selon l'une des revendications précédentes, **caractérisée en ce que** les éléments émetteurs (S1.1 à S2.3) et les éléments récepteurs (E1.1 à E2.3) sont attaqués et analysés successivement, selon un ordre fixe.

9. Barrière lumineuse de sécurité selon l'une des revendications précédentes, **caractérisée en ce qu'**il existe des moyens pour la transmission optique de données entre des éléments émetteurs et récepteurs (S1.1 à S2.3 et E1.1 à E2.3).

10. Barrière lumineuse de sécurité selon l'une des revendications précédentes, **caractérisée en ce qu'**il existe des moyens d'apprentissage pour les seuils de commutation des éléments récepteurs et/ou des courants d'émission des éléments émetteurs.

11. Barrière lumineuse de sécurité selon l'une des revendications précédentes, **caractérisée en ce que** les barrettes d'émission et de réception sont disposées l'une vis-à-vis de l'autre avec une rotation de 180 °.

12. Barrière lumineuse de sécurité selon l'une des revendications précédentes, **caractérisée en ce qu'**il est prévu des raccordements électriques identiques aux deux extrémités des barrettes d'émission et de réception.
